# EUROPÄISCHE PATENTANMELDUNG

(11) **EP 0 680 934 A2**
(43) Veröffentlichungstag der Anmeldung: **08.11.1995**
(21) Anmeldenummer: 95105244.8
(22) Anmeldetag: 07.04.1995
(51) Int. Cl.: C02F 1/62, C02F 1/52, C02F 1/56, C02F 1/28

(54) **Verfahren zur Behandlung schwermetallhaltiger Abwässer**

(30) Priorität: 06.05.1994 DE 4416130
(71) Anmelder: SÜDLEDER GmbH & Co., D-95111 Rehau (DE)
(72) Erfinder: Haner, Artur, Dipl.-Ing., D-95111 Rehau (DE); Heinzig, Thomas, Dr.-Ing., D-95030 Hof (DE); Pöppel, Peter, Dipl.-Ing., D-95145 Oberkotzau (DE); Anders, Frank, Dr., D-01159 Dresden (DE)
(74) Vertreter: Matschkur, Götz, Lindner Patent- und Rechtsanwälte

(57) **Zusammenfassung**

Verfahren zum Abtrennen von Schwermetallen, wie Chrom, aus mehrfach belasteten, z.B. zusätzlich emulgierte Fette enthaltenden Abwässern aus der Lederherstellung und ähnlich beschaffenen Abwässern, wobei vor dem Ausfällen der Schwermetalle zunächst das Fett deemulgiert wird.

## Beschreibung

Die Erfindung bezieht sich auf ein Verfahren zum Abtrennen von Schwermetallen, wie z.B.Chrom, aus mehrfach belasteten, z.B. zusätzlich emulgierte Fette enthaltenden Abwässern aus der Lederherstellung und ähnlich beschaffenen Abwässern.

Die Ausfällung gelösten Chroms aus Gerbrestflotten, beispielsweise mittels alkalischer Chemikalien und die dadurch mögliche Einhaltbarkeit der Grenzwerte der Abwassereinleitung, stößt bei vielen anderen mehrfach belasteten Abwässern aus der Lederherstellung mit zusätzlich emulgierten Fetten, auf erhebliche Schwierigkeiten. Dies gilt speziell dann, wenn die Abwässer, wie beispielsweise bei der Naßzurichtung, einen geringen Chromgehalt bei gleichzeitigem Vorliegen von emulgierten Fetten und/oder Nachgerbstoffen, Farbstoffen oder ähnlichen Substanzen aufweisen.

Der Erfindung liegt daher die Aufgabe zugrunde, ein Verfahren zum Abtrennen von Schwermetallen aus Abwässern so weiterzubilden, daß auch mehrfach belastete Abwässer problemlos gereinigt werden können.

Zur Lösung dieser Aufgabe ist erfindungsgemäß vorgesehen, daß vor dem Ausfällen der Schwermetalle zunächst das Fett deemulgiert wird, und zwar entweder durch Zuführung mechanischer und/oder thermischer Energie, oder aber durch Zufügung oberflächenaktiver Substanzen mit deemulgierender Wirkung, sogenannter Deemulgatoren, und/oder durch Ultraschall.

Der Erfindung liegt dabei die Erkenntnis zugrunde, daß die Blockierung der Schwermetallreinigung bei derartigen mehrfach belasteten Abwässern in erster Linie von den emulgierten Fetten herrührt, die sowohl die alkalisch reagierenden Chemikalien, mit deren Hydroxylgruppen das gelöste Chrom unter Bildung von Chromhydroxyd reagiert, in ihrer Wirkung beeinträchtigen, als auch etwaige Adsorptionsmittel in ihrer Wirkung blockieren.

Dabei hat es sich in Weiterbildung der Erfindung als besonders zweckmäßig erwiesen - obgleich durchaus eine Reinigung auch unter Belassung der deemulgierten Fette im Abwasser möglich ist -, wenn vor dem eigentlichen Ausfällprozeß des Chroms die deemulgierten Fette abgetrennt werden. Zur Abtrennung sind bekannte Filter aller Art geeignet, wobei sich die Filterporenweite dabei nach der Größe der deemulgierten Fetteilchen richtet. Im Falle des Einsatzes von oberflächenaktiven deemulgierenden Substanzen entstehen relativ große Fettflocken, die z.B. durch ein gängiges Filterpressentuch abgetrennt werden können.

Die Abtrennung der deemulgierten Fette hat darüber hinaus auch den Vorteil, daß die anschließend auszufällenden Schwermetalle einfacher und in höherer Qualität wiedergewonnen werden können, insbesondere daß bei der Reinigung von Abwässern aus der Lederindustrie das als Behandlungsmittel notwendige Chrom anschließend wieder in den Behandlungsprozeß eingeschleust werden kann.

Die Dosierung eines bekannten Schwermetall-Fällungsmittels erfolgt zweckmäßigerweise über ein pH-Wertsteuerung und wird bis zu einem pH-Wert geführt, bei dem das ungefällte Chrom sowie das wiedergelöste Chromit in möglichst geringster Konzentration im Abwasser vorliegt. Das gefällte Chromhydroxyd kann anschließend auf an sich bekannte Weise direkt vom Abwasser getrennt werden oder mit polymeren Flockungshilfsmitteln weiterbehandelt werden, wodurch die Flockung und damit verbunden die Flockenabtrennbarkeit verbessert werden.

Zur weiteren Senkung der Chromablaufkonzentration kann die Fällung des Chroms durch eine Adsorption an geeigneten Stoffen, wie z.B. magnetischen Eisenmischoxyden aus dem Gichtstaub, oder Aktivkohle unterstützt werden. Dabei kann das Adsorbens in manchen Fällen auch die Wirkung des Fällungsmittels gänzlich ersetzen und anstelle dieses in der Fällung des Chroms eingesetzt werden, wobei es bei zusätzlicher Anwendung neben alkalisch reagierenden Chemikalien als Fällungsmittel auch vor dem Zusetzen dieser Stoffe eingesetzt werden kann.

Neben der möglichen direkten Abtrennung des Chromhydroxyds und der Adsorptionsagglomerate hat es sich als besonders zweckmäßig erwiesen, diese Komponenten zu größeren Flocken zu verbinden und gemeinsam vom Abwasser zu trennen, wozu wiederum Filter aller Art eingesetzt werden können. Im Falle der Verwendung magnetischer Adsorptionsmittel und anschließender Flockenvergrößerung durch polymere Flockungshilfsmittel kann zur Konglomeratabtrennung auch in an sich bekannter Weise ein Magnetfeld eingesetzt werden. Bei umfangreichen, der vorliegenden Erfindung zugrundeliegenden Versuchen hat sich jedoch gezeigt, daß für die weitere Verwertbarkeit der abgetrennten Stoffe günstiger eine stärker entwässernde Einrichtung verwendet oder zumindest nachgeschaltet werden sollte.

Bekannterweise wird Chrom, z.B. aus Gerbrestflotten, abgetrennt, um es in konzentrierter Schwefelsäure wieder aufzulösen und so für die Gerbung zurückzugewinnen. Ein solcher Einsatz von Recyclingchrom, der bisher unter Fachleuten aus Qualitätsgründen umstritten war, läßt sich in der Praxis wesentlich einfacher und wirksamer durchführen, wenn die Chromabtrennung in erfindungsgemäßer Weise unter vorheriger Abtrennung der emulgierten Fette erfolgt ist, da die Qualität des Recyclingchroms dadurch erheblich verbessert wird.

Die abgetrennten Konglomerate können erneut zur Behandlung des Abwassers eingesetzt werden und so die Abfallmengenbilanz des Verfahrens erheblich verbessert werden. Es hat sich nämlich gezeigt, daß die Adsorptionsmöglichkeiten von z.B. Aktivkohle oder auch die alkalischen Eigenschaften von Calziumhydroxyd mit einem Durchgang der Abwasserreinigung bei weitem nicht erschöpft sind.

Das erfindungsgemäße Verfahren ermöglicht sowohl einen Chargenbetrieb in vorzugsweise geschlossenen Reaktionsgefäßen, als auch einen kontinuierlichen Betrieb. Dabei hat es sich bei einem Chargenbetrieb zwar als möglich herausgestellt, das Verfahren einstufig mit nur einem Reaktionsgefäß durchzuführen. Bevorzugt sollte man aber das Verfahren mehrstufig mit mehreren hintereinandergeschalteten Reaktionsgefäßen ablaufen lassen, um zumindest die deemulgierten Fette nach der Deemulgierung sofort aus dem Abwasser zu entfernen, so daß sie weder das Ausfällen der Schwermetalle selbst, noch die Wiederverwendung der die Schwermetalle enthaltenden Schlämme beeinträchtigen. Bei einem kontinuierlichen Betrieb erfolgt eine solche Abtrennung der ausgefällten Bestandteile nach den einzelnen Behandlungsabschnitten grundsätzlich.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:

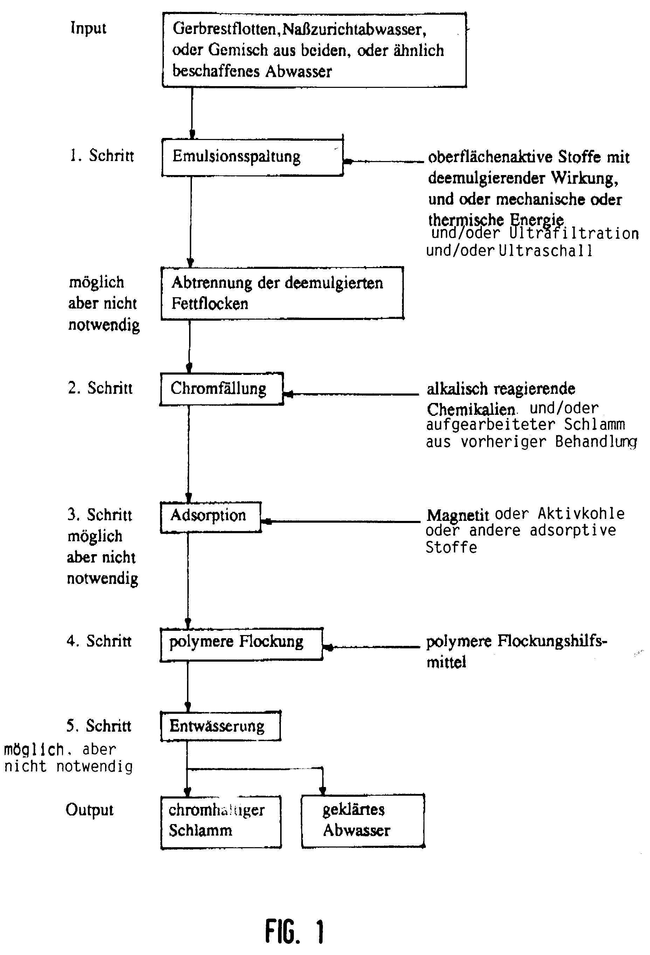

- Fig. 1: ein Verfahrensfließbild, und
- Fig. 2: eine schematische Darstellung einer Reinigungsvorrichtung für den Chargenbetrieb.

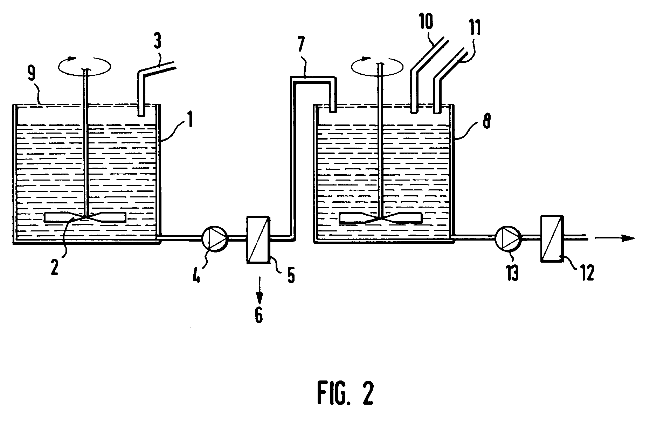

Bei Durchführung des erfindungsgemäßen Verfahrens gemäß Fig. 2 im Chargenbetrieb erfolgt die Destabilisierung der Fettemulsion zweckmäßig in einem Reaktionsgefäß 1 mit kreisförmigem Querschnitt und senkrecht eingebautem Rührwerk 2. Nachdem eine gute Vermischung des Abwassers mit dem dosiert über eine Zuführeinrichtung 3 zugesetzten, oberflächenaktiven, deemulgierend wirkenden Hilfsmittel herbeiführt wurde, kann das Abwasser über eine Pumpe 4 abgezogen und durch einen Filter 5 gepreßt werden, in welchem durch den Pfeil 6 angedeutet die deemulgierten Fettflocken abgetrennt und ausgeschieden werden. Das so vorbehandelte und von emulgiertem Fett befreite Abwasser gelangt über die Zuführeinrichtung 7 in ein zweites Reaktionsgefäß 8, das ebenso wie das erste Reaktionsgefäß bevorzugt als geschlossener Tank ausgeführt sein kann, was in der schematischen Fig. 2 durch den strichlierten Deckel 9 angedeutet ist. Im zweiten Reaktionsgefäß kann nun unabhängig von der Reihenfolge zunächst das Fällungsmittel für die Schwermetalle, das Absorbens oder ein aufgearbeiteter Schlamm aus einem vorherigen Behandlungszyklus in das vorgereinigte Abwasser über die Zuführleitungen 10 und 11 eingebracht werden. Anschließend kann die Flockenbildung durch Zugabe von polymeren Flockungshilfsmitteln in dieses zweite Reaktionsgefäß verstärkt werden und danach die Abtrennung des Schlamms in einem zweiten Filter 12 mit einer vorgeschalteten Pumpe 13 erfolgen. Wie bereits ausgeführt, kann jedoch das gesamte Verfahren ggf. auch in einem Reaktionsgefäß einstufig durchgeführt werden.

Bei einem kontinuierlichen Betrieb des erfindungsgemäßen Verfahrens wird aus einem Misch- und Ausgleichsbecken kontinuierlich Abwasser abgezogen und saugseitig der Pumpe mit einem oberflächenaktiven deemulgierend wirkenden Hilfsmittel vermischt. Druckseitig der Pumpe schließt sich ein Filter an, in dem die deemulgierten Fette abgetrennt werden. Der Klarlauf dieses ersten Filters wird in einem Pufferbecken gesammelt. In diesem erfolgt entweder pH-gesteuert die Zudosierung des Fällungsmittels und/oder mengengesteuert des Adsorbens, bzw. des Schlamms aus einem vorherigen Behandlungszyklus, wobei hier durch ein Rührwerk für eine ausreichende Durchmischung gesorgt wird. Aus diesem Pufferbecken wird kontinuierlich das vorbehandelte Abwasser mit einem polymeren Flockungshilfsmittel saugseitig der zweiten Pumpe behandelt und druckseitig der Pumpe einem zweiten Filter zugeführt. Ob dabei der kontinuierliche Prozeß zur Entleerung der Filter unterbrochen werden muß, hängt wesentlich von der konstruktiven Lösung der Filtertechnik ab.

## Patentansprüche

1. Verfahren zum Abtrennen von Schwermetallen, wie Chrom, aus mehrfach belasteten, z.B. zusätzlich emulgierte Fette enthaltenden Abwässern aus der Lederherstellung, und ähnlich beschaffenen Abwässern, dadurch gekennzeichnet, daß vor dem Ausfällen der Schwermetalle zunächst das Fett deemulgiert wird.

2. Verfahren nach Anspruch 1, dadurch gekennzeichnet, daß das Fett durch Zuführung mechanischer und/oder thermischer Energie deemulgiert wird.

3. Verfahren nach Anspruch 1 oder 2, dadurch gekennzeichnet, daß dem Abwasser oberflächenaktive Substanzen mit deemulgierender Wirkung zugesetzt werden.

4. Verfahren nach einem der Ansprüche 1 bis 3, dadurch gekennzeichnet, daß die emulgierten Fette vor dem Ausfällen der Schwermetalle, z.B. durch Filtern, aus dem Abwasser entfernt werden.

5. Verfahren nach einem der Ansprüche 1 bis 4, dadurch gekennzeichnet, daß dem Abwasser alkalische Chemikalien zur Chromausfällung zugeführt werden.

6. Verfahren nach Anspruch 5, dadurch gekennzeichnet, daß die Dosierung der alkalischen Chemikalien über eine pH-Wertsteuerung erfolgt.

7. Verfahren nach einem der Ansprüche 1 bis 6, dadurch gekennzeichnet, daß die Fällung des Chroms durch Zugabe von Adsorptionsmitteln unterstützt wird.

8. Verfahren nach einem der Ansprüche 1 bis 7, dadurch gekennzeichnet, daß dem Abwasser polymere Flockungsmittel beigefügt werden.

9. Verfahren nach einem der Ansprüche 1 bis 8, dadurch gekennzeichnet, daß dem Abwasser Schlamm aus einem vorherigen Behandlungszyklus mengengesteuert zugeführt wird.

10. Verfahren nach einem der Ansprüche 1 bis 9, dadurch gekennzeichnet, daß es vorzugsweise mehrstufig im Chargenbetrieb in vorzugsweise geschlossenen Reaktionsgefäßen erfolgt.

11. Verfahren nach einem der Ansprüche 1 bis 9, dadurch gekennzeichnet, daß es in einem kontinuierlichen Betrieb unter Abtrennung der ausgefällten Bestandteile nach den einzelnen Behandlungsabschnitten durchgeführt wird.
